# EUROPEAN PATENT APPLICATION

(11) **EP 2 595 419 A1**
(43) Date of publication of application: **22.05.2013**
(21) Application number: 10854655.7
(22) Date of filing: 12.07.2010
(51) Int. Cl.: H04W 4/10, H04L 29/06

(54) **SYSTEM FOR EXCHANGING PTT MESSAGES FOR BRIEF MULTI VIDEO CONFERENCES**

(71) Applicant: Telefónica, S.A., 28013 Madrid (ES)
(72) Inventor: ORDAS ARNAL, Isabel, E-28013 Madrid (ES); GARCÍA BERNARDO, Gustavo, E-28013 Madrid (ES); ARTUÑEDO GUILLÉN, David, E-28013 Madrid (ES); GROSSO VENERO, José Manuel, E-28013 Madrid (ES)
(74) Representative: Gonzalez-Alberto Rodriguez, Natalia
(86) International application number: PCT/ES2010/070483
(87) International publication number: WO 2012/007597

(57) **Abstract**

The invention relates to a system which can be used for exchanging short multimedia messages between two or more users. The system is used, without distinction, for client-server implementations (31, 32, 33) or for server-free client-client implementations (41, 42). The system has the following essential technical features: (i) the session is established (311, 411) when a first client presses a user button and is ended (313, 413) when said first user releases said button; (ii) at the start of the session (311, 411) a list of all the participants is transmitted; (iii) at the start of the session (311, 411) a global session identifier is transmitted; (iv) the clients receiving a PTT message sent by the aforementioned first client optionally reply after receiving said list and identifier.

## Description

### Object of the Invention

As expressed in the title of this specification, the present invention relates to a system for exchanging PTT messages for brief multi video conferences the essential purpose of which consists of providing an alternative system with respect to the systems used today for exchanging multimedia messages or for short video conferences, and an alternative with respect to the systems which are being standardized by official bodies such as OMA (Open Mobile Alliance); and such that the system of the invention has greater simplicity and lower application costs.

### Background of the Invention

Demand for real time multimedia communications services is increasing with the increased availability of fixed and mobile broadband access networks. Furthermore, the new NGN networks require the provision of these services from any access network.

Today, services for video conference between two or more participants are offered as a service that requires network infrastructure with specific equipment for managing session establishment, flow control and audio and video mixing, whereby the corresponding equipment has an excessively high cost, as reflected in Figure 6 of this document.

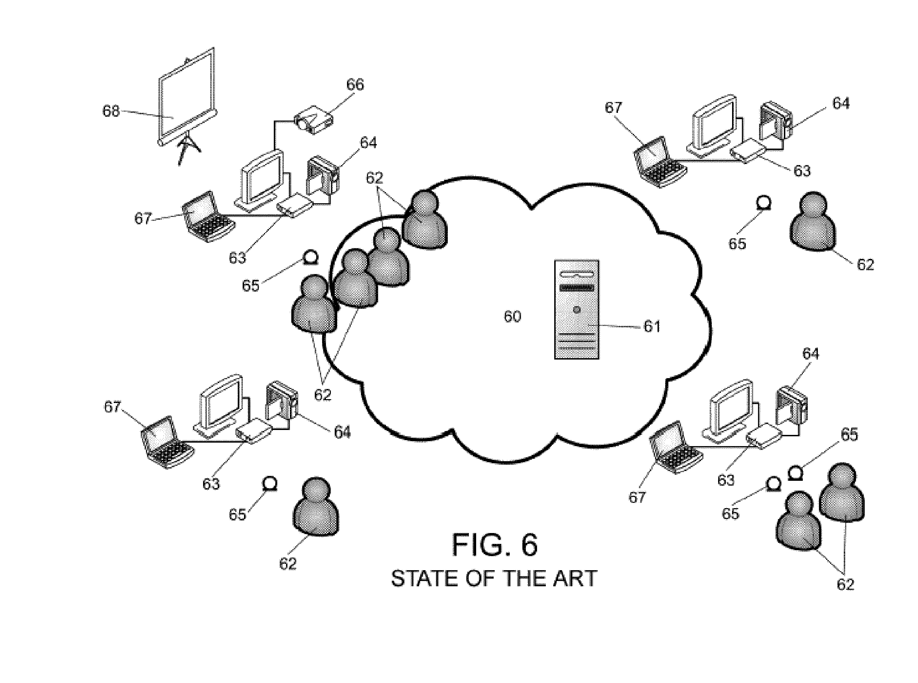

The following elements can be seen in said Figure 6:
60: data network.
61: MCU (Multipoint Control Unit).
62: users of multi video conference.
63: multimedia terminal.
64: video conference camera.
65: microphone.
66: projector.
67: data terminal.
68: display screen.

The MCU element, shown as 61 in Figure 6 of the state of the art, manages the data flow of the terminals connected to the video conference, mixes, switches and processes the audio and video, as well as supports a standard range of audio, video and data. In a multipoint video conference, all the terminals send control flows, audio, video and data to the MCU in a point-to-point manner. The MCU manages the conference in a centralized manner using the control functions.

On the other hand, to enable multi video conferencing it is necessary for all the participants to agree on a time and to start a long and complex call establishment method before the communication can begin. This service is inefficient when a message is to be communicated quickly to the interlocutors.

Figure 7 of this document which also belongs to the state of the art shows a basic signaling and data flow scheme in a conventional multi video conference system.

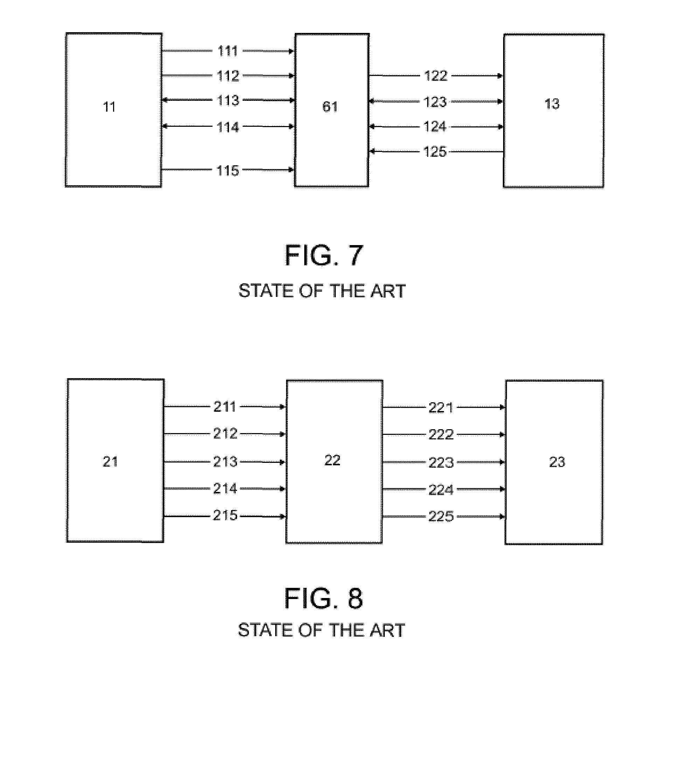

The following elements can be distinguished in said Figure 7, in addition to the aforementioned MCU block shown as 61:
11: client establishing the multi video conference.
13: client invited to the multi video conference.
111: multi video conference establishment flow.
112: multi video conference invitation flow.
113: control of multimedia flow between 11 and 61.
114: multimedia flow between 11 and 61.
115: end of multi video conference.
122: multi video conference invitation flow from MCU.
123: control of multimedia flow between 13 and 61.
124: multimedia flow between 13 and 61.
125: leaving the multi video conference.

Therefore, according to the scheme of Figure 7, the basic model of the state of the art is obtained with the method followed for establishing a multi video conference in a conventional system, and showing only one invited client 13, but this model would have to be replicated as many times as the number of clients involved in the multi video conference. First, the multi video conference (message 111) must be established and then each of the participants must be invited (messages 112 and 122). This is when the two-way multimedia flow exchange (messages 114 and 124) as well as the signaling for controlling those flows (messages 113 and 123) between each of the participating clients and the MCU (61) start.

In this context, a service in which there is a real time one-way multimedia message exchange and in which the recipients can reply to that message in the same manner would be extremely useful. This service is commonly known as Push To Talk and in the case of mobile networks it is called Push To Talk over Cellular (PoC).

The main difference of this service with respect to a conventional telephone call resides in the fact that they are one-way communications of a short duration (normally while the user keeps a button pressed) that are automatically accepted in a quasi-instantaneous manner (in real time) by the receiver.

The main difference of this service with respect to the sending of multimedia messages by other means (email, MMS) resides in the real time sending of multimedia content which is being recorded instead of using a recording mechanism and subsequently sending same.

If such services are offered over IP (Internet Protocol) networks, they can make use of the mechanisms defined in the SIP and RTP protocols for establishing multimedia sessions and exchanging said multimedia content, respectively. In the case of services offered by telecommunications operators, the networks supporting multimedia services primarily based on those same protocols are known as IMS or NGN networks.

Although the common name for this service is Push To Talk, the underlying IP communications technologies allow applying them not only to audio/voice contents but to any other type of multimedia communication (video, text, games, etc.) without requiring the definition of additional methods.

The standardization body, OMA (Open Mobile Alliance), is currently defining the standard for the Push-To-Talk over Cellular service for IMS networks, the version 2.0 of which contemplates new multimedia types in addition to voice message exchange (video, images, text and files) [1].

The solution proposed by OMA does not minimize complexity in comparison with conventional video conference systems since, like these systems, the solution requires establishing a session before exchanging messages, as well as exchanging the messages continuously to control the flow which is transmitted over the channel. On the other hand, the OMA standard has the limitation that it is only possible to transmit one Push2Video message at the same time among the participants of a session. The problems of the OMA solution are described in more detail below.

Furthermore, there are some proprietary service implementations such as Movial's Push-To-Video [2] and Motorola's Push-To-Talk/Push-To-Xperience [3].

There are also other solutions attempting to emulate such services in a simplified manner doing without some of their functionalities, such as the case of Microsoft's Windows Live Messenger voice messages, where these messages are not sent in real time.

Figure 8 of this document which belongs to the state of the art depicts a scheme of the method for exchanging PTT messages according to OMA, with the following references:
21: client establishing the session and PTT message source.
22: PTT server.
23: client invited to the PTT session and PTT message destination.
211: session establishment flow.
212: channel reservation flow.
213: multimedia flow.
214: channel release.
215: session closing flow.
221: session establishment flow from 22.
222: channel reservation notification flow.
223: multimedia flow from 22.
224: channel release notification flow.
225: session closing flow.

With respect to the problems arising with the existing solutions, as depicted in the aforementioned Figure 8, it can be indicated that the exchange of multimedia messages within a PTT service between one or several users as defined by the OMA, as shown in said Figure 8, is very complex. Therefore, before exchanging PTT messages, it is necessary for a session to be established (messages 211 and 221) and subsequently closed (messages 215 and 225) by the source (block 21) with a server (block 22) maintaining the conference status such that all the messages thereof can be correctly forwarded to all the recipients (block 23). SIP is used as the standard for this session management.

In the OMA standard there are two types of sessions depending on how these sessions are created. In pre-established sessions, the parameters (IP address, ports and codecs) which will be used for sending the multimedia flow before creating the session are negotiated. In on demand sessions, there is no such prior negotiation, which is less time efficient.

On the other hand, the sending of multimedia traffic (messages 213 and 223) within that global PTT session requires additional signaling to indicate the moments in which the flow transmission starts (messages 212 and 222) and ends (messages 214 and 224). To that end, the OMA has defined a protocol called the Media Burst Control Protocol (MBCP) for managing multimedia burst exchange over the channel. To implement the MBCP, several state diagrams which must be implement by clients and servers have been designed.

The technical problem derived from this current solution is due, on one hand, to the complexity of the defined method which complicates the service implementation and, on the other, to the resources consumption in specific equipment in the service provider network since it must maintain the state of the PTT sessions and conference for a long time and perform more complex tasks, making the deployment thereof more costly.

Likewise, managing the transmission of multimedia flows with the MBCP is such that the participants cannot transmit their video messages if any other participant is doing the same at the same time; i.e., only one participant can transmit at a time. This is another limitation of the implementation of the service proposed by OMA.

### Abbreviations:

IMS IP Multimedia Subsystem
IP Internet Protocol
MBCP Media Burst Control Protocol
MIME Multipurpose Internet Mail Extensions
MMS Multimedia Messaging System
NGN Next Generation Network
OMA Open Mobile Alliance
PoC Push To Talk over Cellular
PTT Push To Talk
RTP Real-time Transport Protocol
SDP Session Description Protocol
SIP Session Initiation Protocol
XML Extensible Markup Language

### References between brackets:

[1] Open Mobile Alliance (OMA), Push To Talk over Cellular http://www.openmobilealliance.org/Technical/release_program/poc_ v2_l.aspx
[2] Movial, http://www.movial.fi/en/client_software/Other Products/Push_to_V ideo/.
[3] Motorola's Push-To-Talk/Push-To-Xperience, http://www.motorola.com/networkoperators/pdfs/PTX_Brochure.pdf

### Description of the Invention

To achieve the objectives and to prevent the drawbacks indicated in preceding sections, the invention consists of a system for exchanging PTT (Push-to-Talk) messages for brief multi video conferences which can be used for exchanging short multimedia messages between at least two users, for which purpose PTT infrastructures with an implementation in which either there are clients and server, or with an implementation in which there are server-free clients, are used. The PTT message is defined by real time and one-way information exchange between every two users in comparison with the conventional two-way exchange for video conferences in which there is simultaneous back and forth communication between every two users. Furthermore, the PTT message additionally comprises the generation of the multimedia message simultaneously with the transmission thereof, such that the inclusion of means for recording and storing the multimedia message before said transmission is prevented.

The system according to the invention comprises as a novelty at least the following four essential technical features:
a) the multi video conference session with the sending of at least one PTT message is established at the time in which a first user (also called client or participant) presses a user button and is ended when this first user releases that button;
b) a list of participants comprising at least all the participants of the session is compulsorily transmitted at the start of the multi video conference session; where these participants are proposed by the first client mentioned in point a); the actual first user (client or participant) further being included in the list of participants;
c) a global, specifically started session identifier is compulsorily transmitted at the start of the multi video conference session;
d) the clients (also called users or participants) comprised in the list of participants participate in the multi video conference session by default upon receiving the PTT message.

According to the preferred embodiment of the invention, in the system of the invention, in addition to the features expressed above, when a client comprised in the list of participants according to the aforementioned point d) decides to communicate with the participants of the list of participants for a specific PTT message, he/she compulsorily sends that same list of participants expressed in point b) to each of the participants of the list of participants.

Furthermore, according to the preferred embodiment of the system of the invention, the user terminals corresponding to the mentioned clients additionally comprise means for filtering and authorizing multimedia messages before exit and entry thereof to enable reviewing and limiting the messages before sending and receiving them.

On the other hand, in the preferred embodiment of the invention, SIP protocol (Session Initiation Protocol) is used in establishing and closing sessions.

Furthermore, in the preferred embodiment of the system of the invention, the XML standard is used for preparing the aforementioned list of participants of the multi video conference.

With the structure that has been described, the system of the invention has advantages relating to the fact that the concept of "PTT conversation" between a group of users with multi video conference application is maintained and the signaling for establishing PTT sessions being maximally simplified.

On the other hand, the service as defined has no limitation in the number of users that can be sending a one-way PTT message to a group of people at the same time, therefore it is easy to convert the PTT service into a conventional two-way conference between two or more people with greater simplicity. Furthermore, the channels which are established for exchanging these PTT messages are one-way, such that a PTT client can have one transmission channel and several receiving channels at the same time.

To facilitate a better understanding of this specification, drawings forming an integral part thereof in which the object of the invention has been depicted with an illustrative and nonlimiting character are attached below.

### Brief Description of the Drawings

Figure 1 schematically depicts a system for exchanging PTT messages for brief multi video conferences carried out according to the present invention and involving clients and server.
Figure 2 schematically depicts the system of the invention mentioned in the preceding Figure 1 but involving server-free clients.
Figure 3 is a schematic depiction of a SIP message exchange upon pressing a user button according to an example of application of the system of the invention mentioned in the preceding figures.
Figure 4 depicts a SIP message exchange when the button mentioned in the application of the preceding Figure 3 is released.
Figure 5 schematically depicts a SIP message exchange for sending PTT messages simultaneously according to a second application of the system of the invention mentioned in the first two figures.
Figure 6 schematically depicts a conventional video conference service according to the state of the art.
Figure 7 depicts a basic signaling and data flow scheme in a conventional multi video conference system according to the state of the art.
Figure 8 depicts a scheme of a method for exchanging PTT messages according to a standardization proposed by OMA and belonging to the state of the art.

### Description of an Embodiment of the Invention

An example of the invention is described below using the references of the drawings.

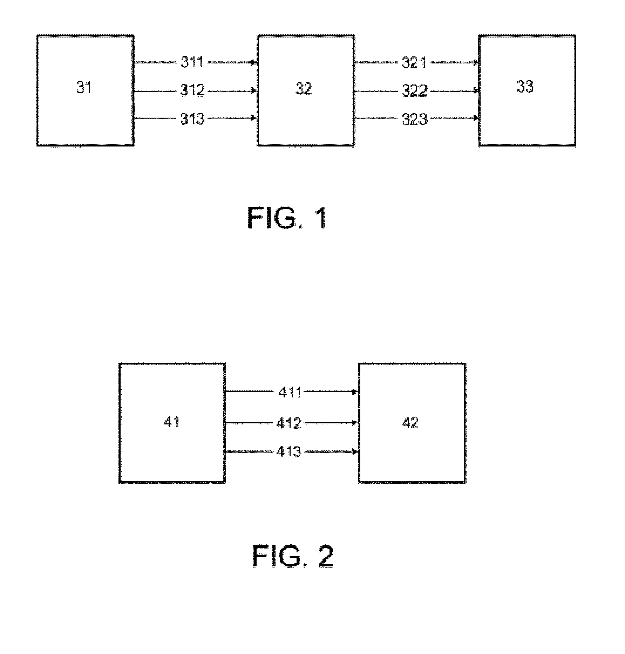

Therefore, the system for exchanging PTT messages for brief multi video conferences of this example of the invention is applied to the exchange of short multimedia messages between two or more users using PTT infrastructures in which there are clients 31, 33 and server 32, as shown in Figure 1, or server-free clients 41, 42, as shown in Figure 2.

The reference numbers of said Figures 1 and 2 depict the following:
31: PTT message source client with the system of the invention.
32: PTT server in the system of the invention.
33: PTT message destination client using the system of the invention.
311: session establishment data flow.
312: multimedia message data flow.
313: session closing data flow.
321: session establishment data flow from the server.
322: multimedia message data flow from the server.
323: data flow corresponding to session closing from the server.
41: server-free PTT message source client with the system of the invention.
42: server-free PTT message destination client with the system of the invention.
411: server-free data flow corresponding to session establishment.
412: server-free data flow corresponding to the multimedia message.
413: server-free data flow corresponding to session closing.

The system of the present example is applied in an assembly formed by the common elements of a PTT infrastructure, such as the aforementioned clients and server, but modifying the interaction processes therebetween, the additional functionality of enabling the simultaneous transmission of PTT messages between several participants of a PTT session or conference further being provided.

When a user wants to send a PTT message to several recipients, said user presses the "talk" button in his/her client application and the session is established at that time through the PTT server. The multimedia message is then sent from the user starting the multi video conference session to the server or to another user. When the user decides to stop transmitting the message, the user releases that button and the session is closed. Therefore, the PTT sessions are only active while the PTT message is being transmitted, since the session start and end times are very shorts in comparison with the time during which the multimedia message is transmitted.

Session establishment and closing can be performed with the SIP protocol; nevertheless, in other examples of the invention, other protocols can be used.

Furthermore according to the example of the invention, the destination users 33, 42 receive a list with all the participants of the multi video conference as well as a global identifier of the conference at the start of the session.

Before deciding on their participation in the multi video conference, the destination clients 33, 42 can view the aforementioned identifier and list.

When a user wants to send a PTT message to several recipients 33, this user presses the corresponding button in his/her client application 31 and the session is established at this time. The messages corresponding to the data flows 311 and 321 are then sent through the server 32. When the user decides to stop transmitting the message, the user releases that button and the session is closed by means of messages 313 and 323, such that the PTT sessions are only active while the PTT message is being transmitted with the data flows 312 and 322 corresponding to the multimedia message, taking into account that the session start time (311 and 321) and session end time (313 and 323) are very short in comparison with the time during which the multimedia message is transmitted.

When there is no PTT server, such as the case of Figure 2, the source PTT client or user 41 sends the communication corresponding to each of the PTT destination clients 42 by means of the data flows 411, 412 and 413.

The concept of what would be a PTT session in OMA, where the sessions encompass several messages transmitted within one and the same PTT context or conversation, is thus changed.

The invitation messages for establishing a session will reach the destination client applications. Usually, when this happens, the request is automatically accepted by the client since the idea of the service is to virtually reproduce the message in the destination in real time. However, there is the possibility that the terminal of the user is configured so that this does not happen by means of defining filtering and authorization rules.

A PTT message can be sent to one or several recipients. The list of users that will receive the message is sent as part of the invitation to the multi video conference session.

The clients receiving the invitation message inviting them to the PTT session extract the list of participants of that PTT conversation and save it in the local storage in the PTT message history. The multimedia flow which will be transmitted after the sending client has received acceptance to the invitation of the PTT session is also saved in the local client associated with said list of participants.

The time sequence and the list of participants associated with the PTT messages constitute the context of a PTT conversation.

If any of the participants of that conversation wants to reply to this prior message in this same context, he/she will only need to select that entry in the PTT message history and push the "Talk" button. The client will create a new invitation which will contain the same list of participants as the selected PTT message.

The list of participants includes the actual PTT message sender. This must be so to prevent clients from having to process the data of said list and replace the address of the user that sent the selected message with the address of the user sending this new message. Therefore, when the system with a server is used, the server must be responsible for processing the list of participants of the session invitations and forwarding said invitations to all the clients appearing in the list except to the client that originated that invitation.

The system of the invention enables a functionality not provided by the service described in the OMA standardization body, consisting of enabling several participants of a PTT conversation to send a message simultaneously with the system of the present invention.

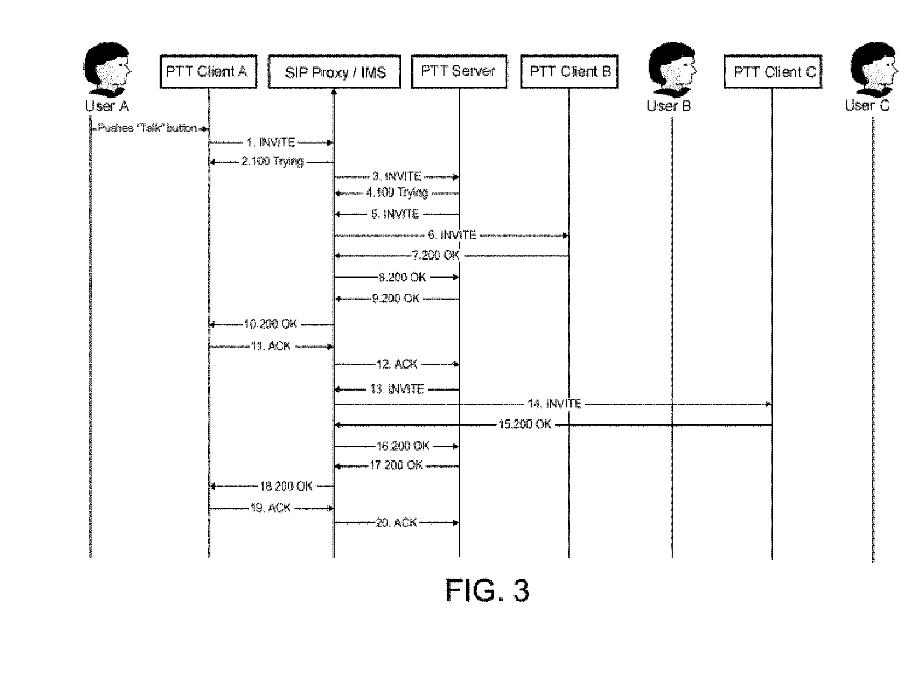

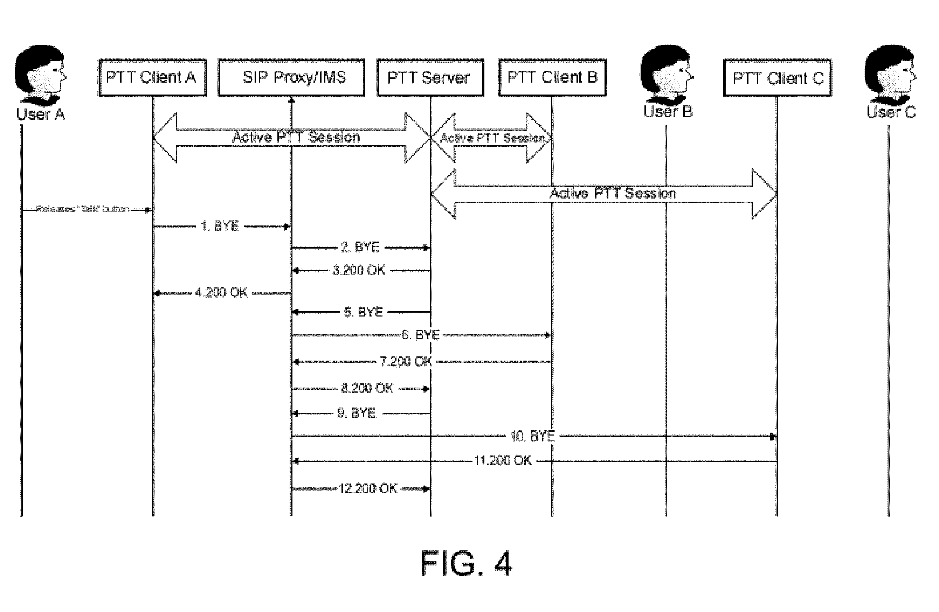

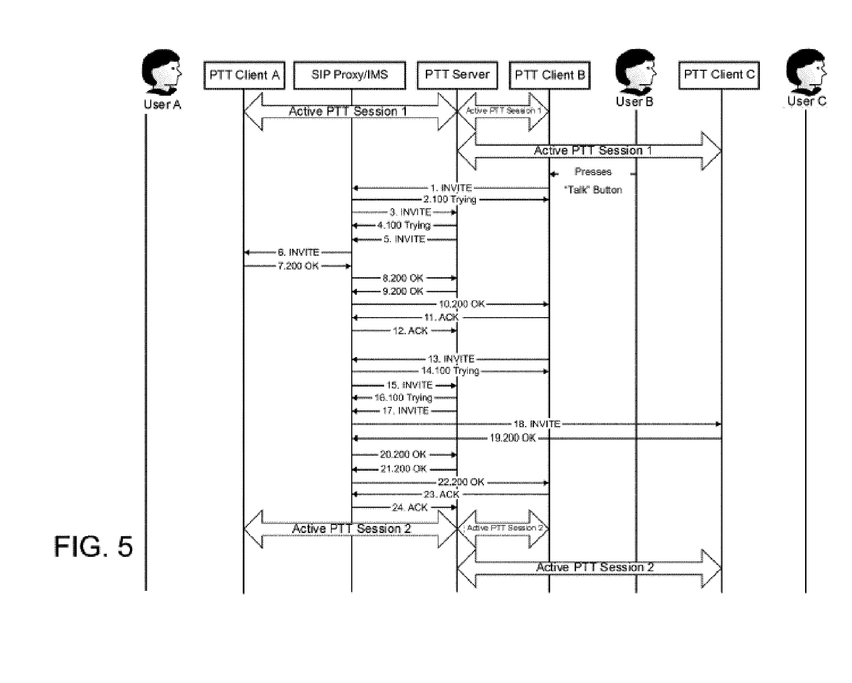

Two specific applications using the system of the present example of the invention and with the help of Figures 3 and 4 for the first application and Figure 5 for the second application will be described below.

In these applications, the SIP protocol is used for session establishment and the XML standard is used for describing the list of participants within the SIP session establishment messages.

In both applications it is assumed that the corresponding multimedia flows include audio and video.

### First application:

User A selects several friends in his/her contact list (user B and user C) and pushes the "Talk" button in his/her client application. The PTT client of user A establishes a session with the PTT server, sending to that end a SIP INVITE request through the SIP/IM network core. The PTT server will then establish the session with PTT clients B and C; to that end a SIP INVITE request will also be sent to them through the SIP/IMS network. The PTT clients B and C automatically reply to the session establishment request with a SIP 200 OK confirmation. This reply is automatic because, as defined, in the service PTT messages are immediately transmitted and reproduced in the receiving client; there is no need to wait for the user to accept the invitation.

Figure 3 details the SIP message exchange between the three clients as well as the user actions.

Some important details of the SIP messages exchanged for establishing the PTT session, such as the SDP parameters for describing the channel characteristics and the XML where the list of the participants appears, are included in the corresponding transmissions.

The channels are one-way in the PTT sessions so SDP attributes, a=sendonly and a=recvonly, can be used for setting this characteristic of channels. The SIP INVITE messages will have the attribute a=sendonly in the SDP because the party starting the session is the one that will transmit the multimedia flow. The SIP 200 OK messages will have the attribute a=recvonly in the SDP because they will only receive the multimedia flow.

As can be seen below, the SIP INVITE message which is sent both from the PTT message source to the server and from the server to the recipients contains in its body an XML text part in which the participants of the PTT conversation are listed.

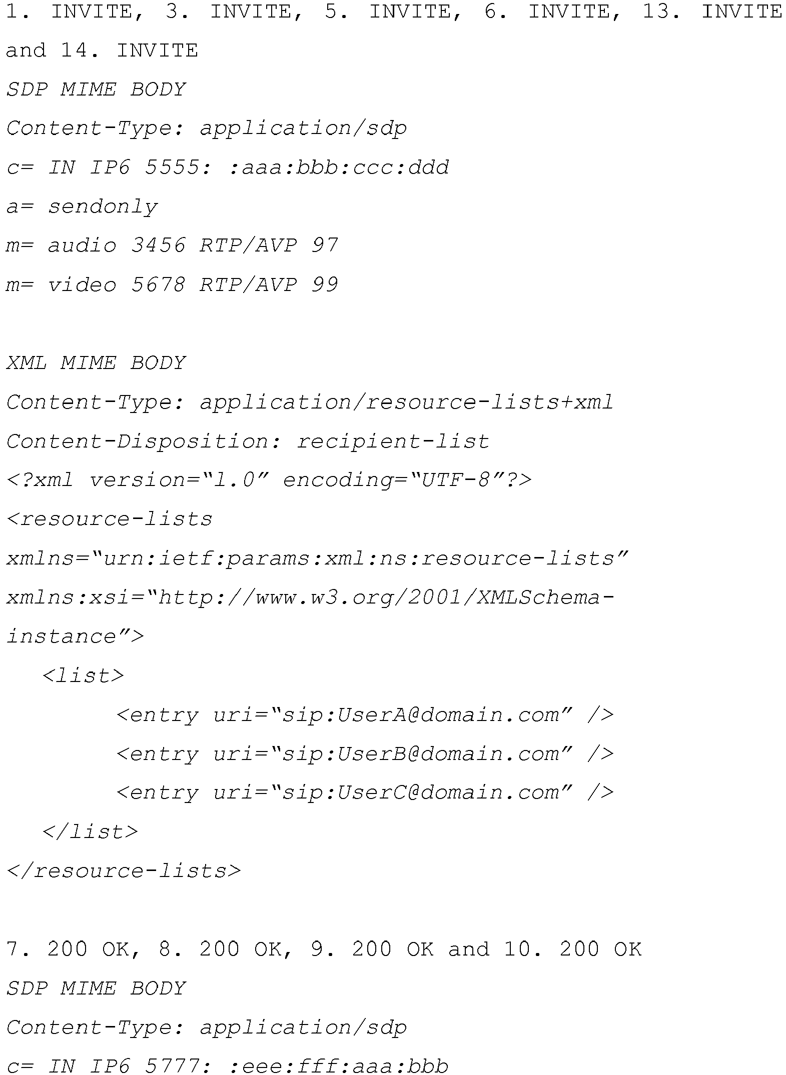

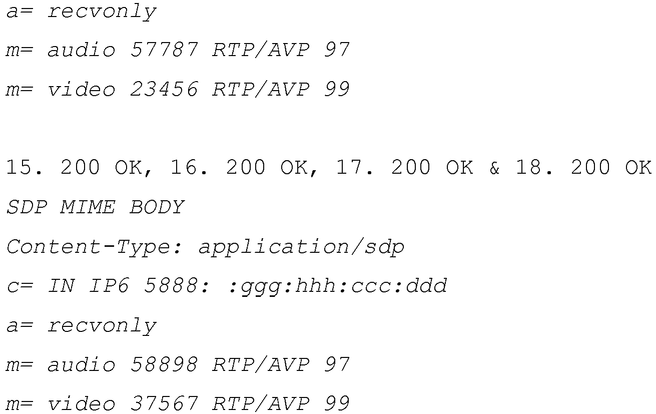

User A then releases the "Talk" button as illustrated in Figure 4. The Push To Talk client A subsequently sends a SIP BYE message to the Push To Talk server through the SIP/IMS network. The server ends the session with clients B and C.

Once one of these PTT messages is received, there is the possibility that any of the participants will reply to the message. In the event that user B selects the PTT message sent by user A in the "History" menu of his/her client application and pushes the "Talk" button, PTT client B would send a SIP INVITE request to clients A and C through the PTT server and the SIP/IMS infrastructure.

This would be a new PTT message processed independently from the preceding one but the users could relate it with the preceding one by the participants thereof, by the multimedia content or by a conversation identifier which is included in the PTT messages.

### Second application:

The second application of the system of the present example is illustrated by means of Figure 5 and describes the case of using the system when one of the clients wants to send another PTT message to the group of the corresponding multi video conference even when the user that is sending a message has not yet finished doing so (the user has not released the button in his/her client application). In this case, and based on the preceding first application of Figures 3 and 4, it is assumed that user B is the one sending this second message, such that session 1 established by A and session 2 established by B take place at the same time, as can be seen in the aforementioned Figure 5.

## Claims

1. A system for exchanging PTT messages for brief multi video conferences which can be used for exchanging short multimedia messages between at least two users by means of Push-To-Talk, "PTT", infrastructures, comprising an implementation selected from client-server implementation (31, 33, 32) and client-client implementation (41, 42); where a PTT message is defined by a real time and one-way information exchange between every two users; where the PTT message additionally comprises the simultaneous generation and transmission of the multimedia message preventing the inclusion of means for recording and storing the multimedia message before said transmission; **characterized in that** it comprises at least the following four essential technical features:
a) the multi video conference session with the sending of at least one PTT message is established (311, 411) at the time in which a first user presses a user button and is ended (313, 413) when said first user releases that button;
b) a list of participants comprising at least all the participants of the session is compulsorily transmitted at the start of the multi video conference session (311, 411); where said participants are proposed by the first client mentioned in point a); the actual first user further being included in the list of participants;
c) a global, specifically started session identifier is compulsorily transmitted at the start of the multi video conference session (311, 411);
d) the clients comprised in said list of participants participate in the multi video conference session by default upon receiving the PTT message.

2. The system for exchanging PTT messages for brief multi video conferences according to claim 1, **characterized in that** when a client comprised in the list of participants according to the aforementioned point d) decides to communicate with the participants of the list of participants for a specific PTT message, he/she compulsorily sends said list of participants expressed in point b) to each of the participants of the list of participants.

3. The system for exchanging PTT messages for brief multi video conferences according to claim 1 or 2, **characterized in that** the user terminals corresponding to the mentioned clients additionally comprise means for filtering and authorizing multimedia messages before exit and entry thereof to enable reviewing and limiting the messages before sending and receiving them.

4. The system for exchanging PTT messages for brief multi video conferences according to any one of the preceding claims, **characterized in that** SIP protocol, "Session Initiation Protocol", is used in establishing and closing sessions.

5. The system for exchanging PTT messages for brief multi video conferences according to any one of the preceding claims, **characterized in that** the XML, "Extensible Markup Language", standard is used for preparing said list of participants of the multi video conference.
